# EUROPEAN PATENT SPECIFICATION

(11) **EP 2 957 765 B1**
(45) Date of publication and mention of the grant of the patent: **09.08.2017**
(21) Application number: 15172356.6
(22) Date of filing: 16.06.2015
(51) Int. Cl.: F03D 1/06

(54) **WIND BLADE TIP JOINT**
WINDTURBINENSCHAUFELSPITZENGELENK
JOINT DE POINTE DE PALE D'ÉOLIENNE

(30) Priority: 19.06.2014 US 201414308792
(43) Date of publication of application: 23.12.2015
(73) Proprietor: General Electric Company, Schenectady, NY 12345 (US)
(72) Inventor: MERZAEUSER, Thomas, Niskayuna, NY New York 12309 (US)
(74) Representative: Bedford, Grant Richard

(56) References cited:
- WO-A2-2010/023299
- DE-A1-102008 055 513
- DE-A1-102010 040 596
- US-A1- 2011 081 247
- US-A1- 2012 269 643
- US-A1- 2012 308 396

## Description

The present application relates generally to wind turbines and more particularly relates to a wind blade tip joint for a wind turbine. An example is disclosed in US2012/0308396 Most environment friendly energy sources presently available come from wind power that is considered to be one of the cleanest. Wind turbines generate electricity by effectively harnessing energy in the wind via a rotor having a set of rotor blades that turns a gearbox and generator, thereby converting mechanical energy to electrical energy that may be deployed to a utility grid. The construction of a modem wind turbine rotor blade generally includes skin or shell components, span-wise extending spar caps, and one or more shear webs.

In recent years, wind turbines for wind power generation have increased in size to achieve improvement in power generation efficiency and to increase the amount of power generation. Along with the increase in size of wind turbines for wind power generation, wind turbine rotor blades have also increased in size, for example, a minimum blade length of 40 meters. When the wind turbine rotor blade is increased in size as described above, various difficulties, such as a difficulty in integral manufacture and a difficulty in conveyance along with difficulties in securing roads and trucks, etc., occur.

There is therefore a desire for a wind blade that is separated in a longitudinal direction for allowing easy handling and transportation and a method for assembling such a wind blade.

The present invention, as defined by the appended claims, is thus provided.

Various features, aspects, and advantages of the present invention will become better understood when the following detailed description is read with reference to the accompanying drawings in which like characters represent like parts throughout the drawings, wherein:
FIG. 1 is a side view of an exemplary wind turbine in accordance with an example of the present technology.
FIG. 2 is a plan view of a rotor blade having a first blade segment and a second blade segment in accordance with an example of the present technology.
FIG. 3 is a perspective view of a section of the first blade segment in accordance with an example of the present technology.
FIG. 4 is a perspective view of a section of the second blade segment at the chord-wise joint in accordance with an example of the present technology.
FIG. 5 shows an assembly of the wind blade having the first blade segment joined with the second blade segment in accordance with an example of the present technology.
FIG. 6 shows an exploded perspective view of the multiple supporting structures of the assembly of the rotor blade in accordance with an example of the present technology.
FIG. 7 is a flow chart of a method of assembling a wind turbine blade in accordance with an example of the present technology.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Further, the terms "wind blade" and "rotor blade" are used interchangeably in the present invention. Any examples of operating parameters are not exclusive of other parameters of the disclosed embodiments.

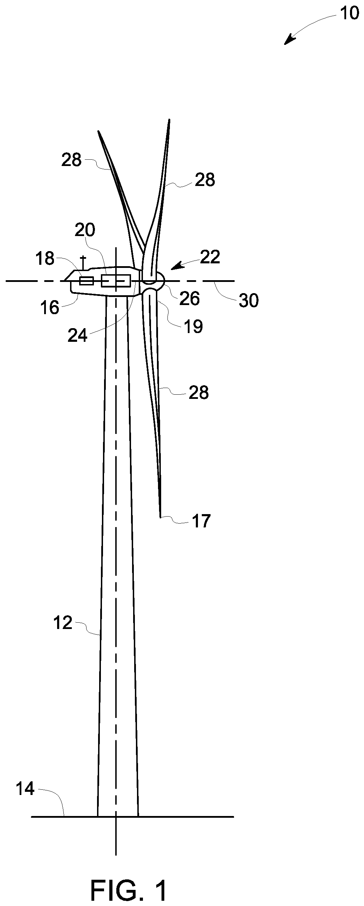

FIG. 1 is a side view of an exemplary wind turbine 10 in accordance with an embodiment of the present invention. In this embodiment, the wind turbine 10 is a horizontal-axis wind turbine. Alternatively, the wind turbine 10 may be a vertical-axis wind turbine. In the present embodiment, the wind turbine 10 includes a tower 12 that extends from a support surface 14, a nacelle 16 mounted on the tower 12, a generator 18 positioned within the nacelle 16, a gearbox 20 coupled to the generator 18, and a rotor 22 that is rotationally coupled to the gearbox 20 with a rotor shaft 24. The rotor 22 includes a rotatable hub 26 and at least one rotor blade 28 coupled to and extending outward from the rotatable hub 26. As shown, the rotor blade 28 includes a blade tip 17 to a blade root 19.

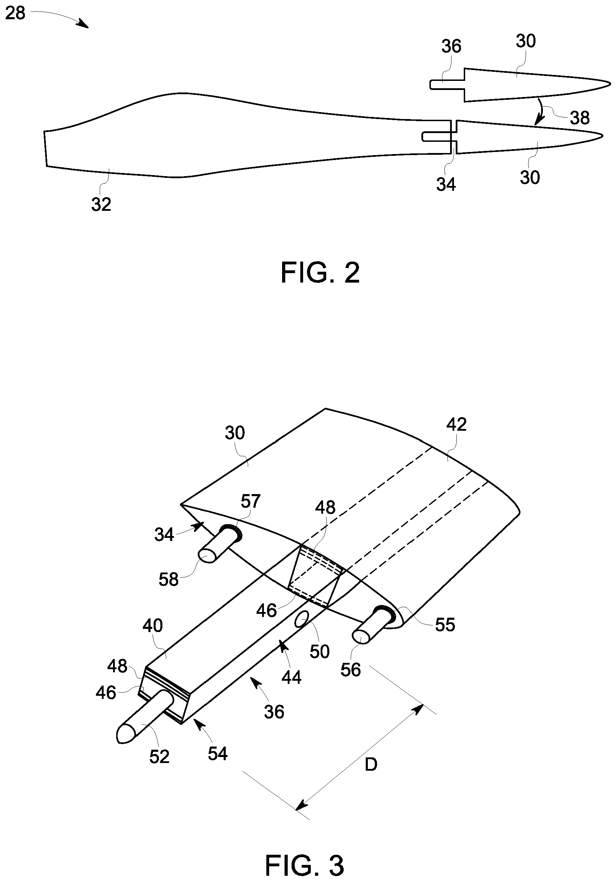

FIG. 2 is a plan view of a rotor blade 28 having a first blade segment 30 and a second blade segment 32 in accordance with an example of the present technology. The first blade segment 30 and the second blade segment 32 extends in opposite directions from a chord-wise joint 34. Each of the blade segments 30, 32 includes a pressure side shell member and a suction side shell member. The first blade segment 30 and the second blade segment 32 are connected by at least an internal support structure 36 extending into both blade segments 30, 32 to facilitate joining of the blade segments 30, 32. The arrow 38 shows that the segmented rotor blade 28 in the illustrated example includes two blade segments 30, 32 and that these blade segments 20, 32 are joined by inserting the internal support structure 36 into the second blade segment 32.

FIG. 3 is a perspective view of a section of the first blade segment 30 in accordance with an example of the present technology. The first blade segment 30 includes a beam structure 40 that forms a portion of the internal support structure 36 and extends lengthways for structurally connecting with the second blade segment 32. The beam structure 40 forms a part of the first blade segment 30 having an extension protruding from a spar section 42, thereby forming an extending spar section. The beam structure 40 includes a shear web 44 connected with a suction side spar cap 46 and a pressure side spar cap 48.

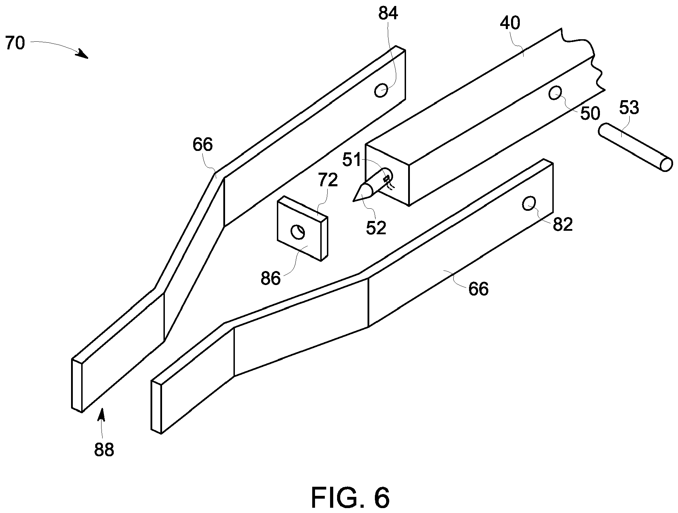

Further, the first blade segment 30 includes one or more first bolt joints towards a first end 54 of the beam structure 40. In a non-limiting example, the bolt joint includes a pin that is in a tight interference fit with a bush. As shown, the one or more bolt joints includes one bolt tube 52 located on the beam structure 40. As shown, the bolt tube 52 is oriented in a span-wise direction. The first blade segment 30 also includes one bolt joint slot 50 located on the beam structure proximate to the chord-wise joint 34. This bolt joint slot 50 is oriented in a chord-wise direction. In one example, there may be a bushing within the bolt joint slot 50 arranged in a tight interference fit with a bolt tube or pin (shown as pin 53 in FIG. 6). Further, the first blade segment 30 includes multiple second bolt joint tubes 56, 58 located at the chord-wise joint 34. The multiple second bolt joint tubes 56, 58 include a leading edge bolt joint tube 56 and a trailing edge bolt joint tube 58. Each of the leading edge bolt joint tube 56 and the trailing edge bolt joint tube 58 is oriented in a span-wise direction. In one example, each of the multiple second bolt joint tubes 56, 58 include multiple flanges 55, 57 respectively that are configured to distribute compression loads at the chord-wise joint 34.

It is to be noted that the bolt tube 52 located at the first end of beam structure 40 is separated span-wise with the multiple second bolt joint tubes 56, 58 located at the chord-wise joint 34 by an optimal distance D. This optimal distance D may be such that the chord-wise joint 34 is able to withstand substantial bending moments caused due to shear loads acting on the chord-wise joint 34. In one non-limiting example, each of the bolt joints connecting the first and second blade segments 30, 32 may include an interference-fit steel bushed joint.

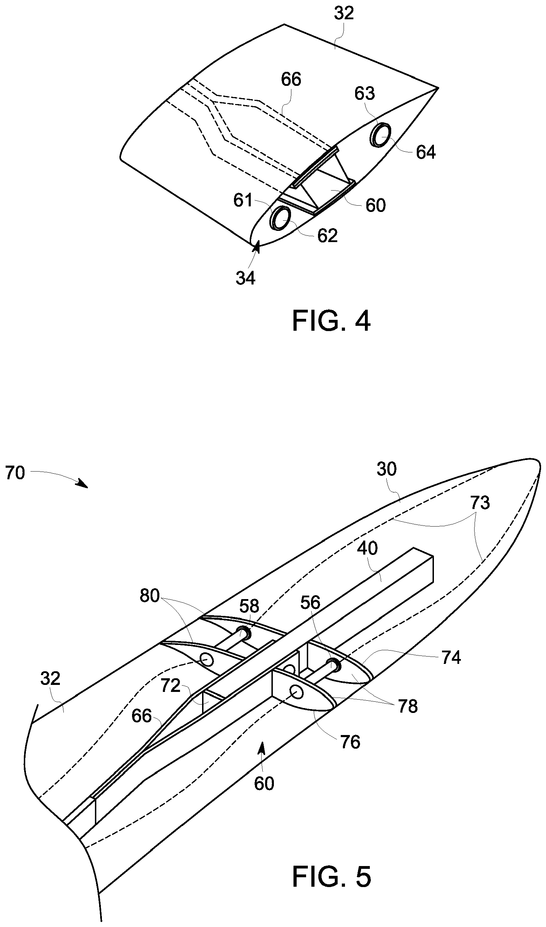

FIG. 4 is a perspective view of a section of the second blade segment 32 at the chord-wise joint 34 in accordance with an example of the present technology. The second blade segment 32 shows a receiving section 60 extending lengthways within the second blade segment 32 for receiving the beam structure 40 of the first blade segment 30. The receiving section 60 includes multiple spar structures 66 that extend lengthways for connecting with the beam structure 40 of the first blade segment 30. As shown, the second blade segment 32 further includes bolt joint slots 62, 64 for receiving bolt tubes 56, 58 (shown in FIG. 3) of the first blade segment 30 and forming tight interference fittings. In one example, each of the multiple bolt joint slots 62, 64 include multiple flanges 61, 63 respectively that are configured to distribute compression loads at the chord-wise joint 34.

FIG. 5 shows an assembly 70 of the wind blade 28 having the first blade segment 30 joined with the second blade segment 32 in accordance with an example of the present technology. In this example, the assembly 70 illustrates multiple supporting structures beneath outer shell members of the rotor blade 28 having the first blade segment 30 joined with the second blade segment 32. As shown, the receiving section 60 includes the multiple spar structures 66 extending lengthways and supports the beam structure 40. The receiving section 60 also includes a rectangular fastening element 72 that connects with the bolt tube 52 of the beam structure 40 in the span-wise direction. Further, both the first and the second blade segment 30, 32 includes chord-wise members 74, 76 respectively at the chord-wise joint 34. The chord-wise members 74, 76 includes leading edge bolt openings 78 and trailing edge bolt openings 80 that allows bolt joint connections between the first and second blade segments 30, 32. As shown, the chord-wise members 74, 76 are connected by bolt tubes 56 and 68 that are in tight interference fit with bushing located in the leading edge bolt openings 78 and trailing edge bolt openings 80. In a non-limiting example, each of the spar structures 66, the rectangular fastening element 72, and the chord-wise members 74, 76 are made up of glass reinforced fibers. In this example, the assembly 70 also includes multiple lightening receptor cables 73 that are embedded between the multiple bolt tubes or pins 56, 58 and the bushing connections attached to the chord-wise members 74, 76.

FIG. 6 shows an exploded perspective view of the multiple supporting structures of the assembly 70 towards the receiving section 60 of the rotor blade 28. As shown, a pair of spar structures 66 is configured to receive the beam structure 40 and includes bolt joint slots 82, 84 that are aligned with the bolt joint slot 50 of the beam structure 40 through which a bolt tube or pin 53 is inserted and remains in a tight interference fit such that spar structures 66 and the beam structure 40 are joined together by during assembling. FIG. 6 also shows the rectangular fastening element 72 that includes a bolt joint slot 86 configured for receiving the bolt tube 52 of the beam structure 40 forming a tight interference fit bolted joint. Further, the pair of spar structures 66 is joined together at one end 88 using a suitable adhesive material or an elastomeric seal. In one example, a sensor element 51 is disposed in the pin or bolt tube 52. The sensor element may help in receiving and sending signals to a control unit (not shown) of the wind turbine 10 (as shown in FIG. 1), which signals may enable sensing multiple parameters including blade loads or stresses. This may help in effective operation of the wind turbine 10 (shown in FIG. 1).

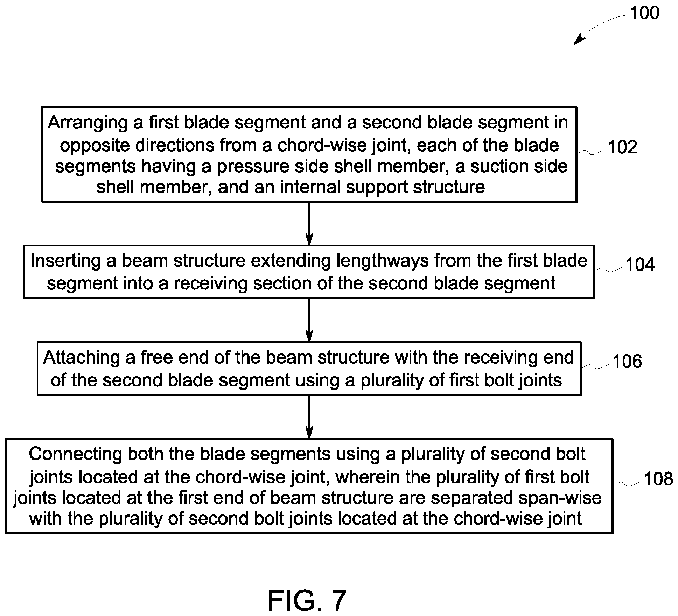

FIG. 7 is a flow chart 100 of a method of assembling a wind turbine blade in accordance with an example of the present technology. At step 102, the method includes arranging a first blade segment and a second blade segment in opposite directions from a chord-wise joint, each of the blade segments having a pressure side shell member, a suction side shell member, and an internal support structure. At step 104, the method also includes inserting a beam structure extending lengthways from the first blade segment into a receiving section of the second blade segment. Further at step 106, the method includes attaching a free end of the beam structure with the receiving end of the second blade segment using multiple first bolt joints. The method also includes attaching the free end of the beam structure with the receiving end of the second blade segment using one first of the multiple first bolt joints that is oriented in a span-wise direction and one second of the multiple first bolt joints in a chord-wise direction. Furthermore, at step 108, the method includes connecting both the blade segments using multiple second bolt joints located at the chord-wise joint. The multiple second bolt joints are oriented in a span-wise direction and include a leading edge bolt joint and a trailing edge bolt joint. The multiple first bolt joints located at the first end of beam structure are separated span-wise with the multiple second bolt joints located at the chord-wise joint.

Advantageously, the present technology ensures efficient reduction of connecting loads, leading to simplified moment flow between the multiple supporting structures of the wind blade. Further, the present technology ensures low cost, reliable, and scalable connections. Due to the customizable blade geometry and segmented blade parts, there is reduction in transportation costs. Furthermore, the easy handling and assembling of the wind blade leads to reduction of turbine down time during wind blade maintenance.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A wind turbine blade, comprising:
   a first blade segment and a second blade segment extending in opposite directions from a chord-wise joint, each of the blade segments having a pressure side shell member, a suction side shell member, and an internal support structure;
   the first blade segment comprising a beam structure extending lengthways that structurally connects with the second blade segment at a receiving section, wherein the beam structure forms a portion of the internal support structure and comprises a shear web connected with a suction side spar cap and a pressure side spar cap;
   one or more first bolt joints located at a first end of the beam structure for connecting with the receiving end of the second blade segment; and
   a plurality of second bolt joints located at the chord-wise joint, wherein the plurality of first bolt joints located at the first end of beam structure are separated span-wise with the plurality of second bolt joints located at the chord-wise joint.
2. The wind turbine blade of clause 1, wherein the plurality of second bolt joints comprises a leading edge bolt joint and a trailing edge bolt joint.
3. The wind turbine blade of any preceding clause, wherein each of the leading edge bolt joint and the trailing edge bolt joint is oriented in a span-wise direction and comprises one or more flanges that are configured to distribute compression loads at the chord-wise joint.
4. The wind turbine blade of any preecding clause, wherein the one first bolt joint located at the first end of the beam structure is oriented in a span-wise direction.
5. The wind turbine blade of any preceding clause, further comprising a sensor element disposed on the one first bolt joint for measuring multiple parameters.
6. The wind turbine blade of any preceding clause, wherein the multiple parameters measured by the sensor element comprises blade loads or stresses.
7. The wind turbine blade of any preceding clause, wherein one of the plurality of second bolt joints located proximate to the chord-wise joint on the beam structure is oriented in a chord-wise direction.
8. The wind turbine blade of any preceding clause, wherein the receiving section of the second blade segment comprises a plurality of spar structures extending lengthways for connecting with the beam structure of the first blade segment using one of the plurality of first bolt joints in the chord-wise direction.
9. The wind turbine blade of any preceding clause, wherein the receiving section of the second blade segment comprises a rectangular fastenting element that connects with the beam structure of the first blade section using one of the plurality of first bolt joints in the span-wise direction.
10. The wind turbine blade of any preceding clause, further comprising a plurality of chordwise members at the chord-wise joint that are made up of fiber reinforced plastic for supporting the beam structure.
11. The wind turbine blade of any preceding clause, further comprising a plurality of lightening receptor cables that are embedded between the plurality of second bolt tubes or pins and a plurality of bushing connections attached to the plurality of chordwise members.
12. A method of assembling a wind turbine blade, the method comprising:
   arranging a first blade segment and a second blade segment in opposite directions from a chord-wise joint, each of the blade segments having a pressure side shell member, a suction side shell member, and an internal support structure;
   inserting a beam structure extending lengthways from the first blade segment into a receiving section of the second blade segment;
   attaching a free end of the beam structure with the receiving end of the second blade segment using one or more first bolt joints; and
   connecting both the blade segments using a plurality of second bolt joints located at the chord-wise joint, wherein the plurality of first bolt joints located at the first end of beam structure are separated span-wise with the plurality of second bolt joints located at the chord-wise joint.
13. The method of any preceding clause, further comprising attaching the free end of the beam structure with the receiving end of the second blade segment using the one first bolt joint that is oriented in a span-wise direction.
14. The method of any preceding clause, wherein the plurality of second bolt joints comprises a leading edge bolt joint and a trailing edge bolt joint oriented in a span-wise direction.
15. The method of any preceding clause, wherein the plurality of second bolt joints comprises a bolt joint located on the beam structure in a chord-wise direction proximate to the chord-wise joint.
16. A wind turbine comprising:
   a plurality of wind blades, wherein each of the plurality of wind blades comprising:
      a first blade segment and a second blade segment extending in opposite directions from a chord-wise joint, each of the blade segments having a pressure side shell member, a suction side shell member, and an internal support structure;
      the first blade segment comprising a beam structure extending lengthways that structurally connects with the second blade segment at a receiving section, wherein the beam structure forms a portion of the internal support structure and comprises a shear web connected with a suction side spar cap and a pressure side spar cap;
      one or more first bolt joints located at a first end of the beam structure for connecting with the receiving end of the second blade segment; and
      a plurality of second bolt joints located at the chord-wise joint, wherein the plurality of first bolt joints located at the first end of beam structure are separated span-wise with the plurality of second bolt joints located at the chord-wise joint.
17. The wind turbine of any preceding clause, wherein the plurality of second bolt joints comprises a leading edge bolt joint and a trailing edge bolt joint arranged symmetrically about the beam structure of the first blade segment and configured for withstanding torsion moments.
18. The wind turbine of any preceding clause, wherein the one first bolt joint located at the first end of the beam structure is oriented in a span-wise direction.
19. The wind turbine of any preceding clause, further comprising a plurality of chordwise members at the chord-wise joint that are made up of fiber reinforced plastic for supporting the beam structure.
20. The wind turbine of any preceding clause, further comprising a plurality of lightening receptor cables that are embedded between the plurality of second bolt tubes or pins and a plurality of bushing connections attached to the plurality of chordwise members.

## Claims

1. A wind turbine blade (28), comprising:
a first blade segment (30) and a second blade segment (32) extending in opposite directions from a chord-wise joint (34), each of the blade segments (30, 32) having a pressure side shell member, a suction side shell member, and an internal support structure;
the first blade segment (30) comprising a beam structure (40) extending lengthways that structurally connects with the second blade segment (32) at a receiving section, wherein the beam structure (40) forms a portion of the internal support structure and comprises a shear web (44) connected with a suction side spar cap (46) and a pressure side spar cap (48);
one or more first bolt joints including a bolt tube (52) located at a first end of the beam structure (40) for connecting by interference fit with the receiving end of the second blade segment (32); and
a plurality of second bolt joints including respective bolt tubes (56,58) located at the chord-wise joint (34) for connecting the first and second blade segments by interference fit, wherein the one or more first bolt joints located at the first end of beam structure (40) are separated span-wise with the plurality of second bolt joints located at the chord-wise joint.

2. The wind turbine blade (28) of claim 1, wherein the plurality of second bolt joints comprises a leading edge bolt joint and a trailing edge bolt joint.

3. The wind turbine blade (28) of any preceding claim, wherein each of the leading edge bolt joint and the trailing edge bolt joint is oriented in a span-wise direction and comprises one or more flanges (55, 57) that are configured to distribute compression loads at the chord-wise joint.

4. The wind turbine blade (28) of any preceding claim, wherein the one first bolt joint located at the first end of the beam structure (40) is oriented in a span-wise direction.

5. The wind turbine blade (28) of any preceding claim, further comprising a sensor element (51) disposed on the one first bolt joint for measuring multiple parameters.

6. The wind turbine blade (28) of claim 5, wherein the multiple parameters measured by the sensor element (51) comprises blade loads or stresses.

7. The wind turbine blade (28) of any preceding claim, wherein one of the plurality of second bolt joints located proximate to the chord-wise joint (34) on the beam structure (40) is oriented in a chord-wise direction.

8. The wind turbine blade (28) of any preceding claim, wherein the receiving section of the second blade segment (32) comprises a plurality of spar structures (66) extending lengthways for connecting with the beam structure (40) of the first blade segment (30) using one of the plurality of first bolt joints in the chord-wise direction.

9. The wind turbine blade (28) of any preceding claim, wherein the receiving section of the second blade segment (32) comprises a rectangular fastenting element that connects with the beam structure (40) of the first blade segment (30) using one of the plurality of first bolt joints in the span-wise direction.

10. The wind turbine blade (28) of any preceding claim, further comprising a plurality of chordwise members at the chord-wise joint that are made up of fiber reinforced plastic for supporting the beam structure (40).

11. The wind turbine blade (28) of any preceding claim, further comprising a plurality of lightening receptor cables that are embedded between the plurality of second bolt tubes (56,58) or pins and a plurality of bushing connections attached to the plurality of chordwise members.

12. A method (100) of assembling a wind turbine blade (28) of any preceding claim, the method comprising:
arranging (102) a first blade segment (30) and a second blade segment (32) in opposite directions from a chord-wise joint (34), each of the blade segments having a pressure side shell member, a suction side shell member, and an internal support structure;
inserting (104) a beam structure (40) extending lengthways from the first blade segment into a receiving section of the second blade segment;
attaching (106) a free end of the beam structure (40) with the receiving end of the second blade segment using one or more first bolt joints; and
connecting (108) both the blade segments (30, 32) using a plurality of second bolt joints located at the chord-wise joint, wherein the plurality of first bolt joints located at the first end of beam structure are separated span-wise with the plurality of second bolt joints located at the chord-wise joint.

13. The method (100) of claim 12, further comprising attaching the free end of the beam structure (40) with the receiving end of the second blade segment (32) using the one first bolt joint that is oriented in a span-wise direction.

## Patentansprüche

1. Windturbinenblatt (28), umfassend:
ein erstes Blattsegment (30) und ein zweites Blattsegment (32), die in entgegengesetzten Richtungen von einer in Sehnenrichtung verlaufenden Verbindung (34) verlaufen, wobei jedes der Blattsegmente (30, 32) ein Druckseitenschalenglied, ein Saugseitenschalenglied und eine innere Stützstruktur aufweist;
wobei das erste Blattsegment (30) eine längs verlaufende Holmstruktur (40) umfasst, die an einer Aufnahmesektion strukturell zum zweiten Blattsegment (32) verbindet, wobei die Holmstruktur (40) einen Abschnitt der inneren Stützstruktur ausbildet und einen Schersteg (44) umfasst, der mit einer Saugseitensparrenkappe (46) und einer Druckseitensparrenkappe (48) verbunden ist;
eine oder mehr Bolzenverbindungen, die ein Bolzenrohr (52) enthalten, das sich am ersten Ende der Holmstruktur (40) zum Verbinden zum Aufnahmeende des zweiten Blattsegments (32) durch Presspassung befindet; und
mehrere zweite Bolzenverbindungen, die mehrere jeweilige Bolzenrohre (56, 58) enthalten, die sich an der in Sehnenrichtung verlaufenden Verbindung (34) zum Verbinden des ersten und zweiten Blattsegments durch Presspassung befinden, wobei die eine oder mehr ersten Bolzenverbindungen, die sich am ersten Ende der Holmstruktur (40) befinden, in Sehnenrichtung von den mehreren zweiten Bolzenverbindungen getrennt sind, die sich an der in Sehnenrichtung verlaufenden Verbindung befinden.

2. Windturbinenblatt (28) nach Anspruch 1, wobei die mehreren zweiten Bolzenverbindungen eine Vorderkantenbolzenverbindung und eine Hinterkantenbolzenverbindung umfassen.

3. Windturbine (28) nach einem der vorhergehenden Ansprüche, wobei jede der Vorderkantenbolzenverbindung und der Hinterkantenbolzenverbindung in einer Spannweitenrichtung ausgerichtet ist und einen oder mehr Flansche (55, 57) umfasst, die zum Verteilen von Kompressionslasten an der in Sehnenrichtung verlaufenden Verbindung konfiguriert sind.

4. Windturbinenblatt (28) nach einem der vorhergehenden Ansprüche, wobei die erste Bolzenverbindung, die sich am ersten Ende der Holmstruktur (40) befindet, in einer Spannweitenrichtung ausgerichtet ist.

5. Windturbinenblatt (28) nach einem der vorhergehenden Ansprüche, ferner umfassend ein Sensorelement (51), das an der ersten Bolzenverbindung zum Messen von mehrfachen Parametern angeordnet ist.

6. Windturbinenblatt (28) nach Anspruch 5, wobei die mehrfachen Parameter, die durch das Sensorelement (51) gemessen werden, Blattlasten oder -belastungen umfassen.

7. Windturbinenblatt (28) nach einem der vorhergehenden Ansprüche, wobei eine der mehreren zweiten Bolzenverbindungen, die sich nahe an der in Sehnenrichtung verlaufenden Verbindung (34) an der Holmstruktur (40) befinden, in einer in Sehnenrichtung verlaufenden Ausrichtung ausgerichtet ist.

8. Windturbinenblatt (28) nach einem der vorhergehenden Ansprüche, wobei die Aufnahmesektion des zweiten Blattsegments (32) mehrere Sparrenstrukturen (66) umfasst, die längs zum Verbinden zur Holmstruktur (40) des ersten Blattsegments (30) unter Benutzung von einer der mehreren ersten Bolzenverbindungen in der Sehnenrichtung verlaufen.

9. Windturbinenblatt (28) nach einem der vorhergehenden Ansprüche, wobei die Aufnahmesektion des zweiten Blattsegments (32) ein rechteckiges Befestigungselement umfasst, das unter Benutzung von einer der ersten Bolzenverbindungen an der Spannweitenrichtung zur Holmstruktur (40) des ersten Blattsegments (30) verbindet.

10. Windturbinenblatt (28) nach einem der vorhergehenden Ansprüche, ferner umfassend mehrere Glieder in Sehnenrichtung an der in Sehnenrichtung verlaufenden Verbindung, die aus faserverstärktem Kunststoff zum Stützen der Holmstruktur (40) gebildet sind.

11. Windturbinenblatt (28) nach einem der vorhergehenden Ansprüche, ferner umfassend mehrere Blitzfängerkabel, die zwischen den mehreren zweiten Bolzenrohren (56, 58) eingelassen sind, oder Stifte und mehrere Buchsenverbindungen, die an den mehreren in Sehnenrichtung verlaufenden Gliedern angebracht sind.

12. Verfahren (100) zum Zusammenbauen einer Windturbine (28) nach einem der vorhergehenden Ansprüche, das Verfahren umfassend:
Anordnen (102) eines ersten Blattsegments (30) und eines zweiten Blattsegments (32) in entgegengesetzten Richtungen von einer in Sehnenrichtung verlaufenden Verbindung (34), wobei jedes der Blattsegmente ein Druckseitenschalenglied, ein Saugseitenschalenglied und eine innere Stützstruktur aufweist;
Einführen (104) einer Holmstruktur (40), die längs vom ersten Blattsegment verläuft, in eine Aufnahmesektion des zweiten Blattsegments;
Anbringen (106) eines freien Endes der Holmstruktur (40) am Aufnahmeende des zweiten Blattsegments unter Benutzung von einer oder mehr ersten Bolzenverbindungen; und
Verbinden (108) beider Blattsegmente (30, 32) unter Benutzung von mehreren zweiten Bolzenverbindungen, die sich an der in Sehnenrichtung verlaufenden Verbindung befinden, wobei die mehreren ersten Bolzenverbindungen, die sich am ersten Ende der Holmstruktur befinden, in Sehnenrichtung von den mehreren zweiten Bolzenverbindungen getrennt sind, die sich an der in Sehnenrichtung verlaufenden Verbindung befinden.

13. Verfahren (100) nach Anspruch 12, ferner umfassend das Anbringen des freien Endes der Holmstruktur (40) am Aufnahmeende des zweiten Blattsegments (32) unter Benutzung der ersten Bolzenverbindung, die in einer Spannweitenrichtung ausgerichtet ist.

## Revendications

1. Pale d'éolienne (28) comprenant :
un premier segment de pale (30) et un second segment de pale (32) s'étendant dans des sens opposés depuis un joint dans le sens de la corde (34), chacun des segments de pale (30, 32) ayant un élément de coque d'intrados, un élément de coque d'extrados et une structure de support interne ;
le premier segment de pale (30) comprenant une structure de poutre (40) s'étendant longitudinalement qui se raccorde structurellement au second segment de pale (32) dans une section réceptrice, dans laquelle la structure de poutre (40) forme une partie de la structure de support interne et comprend une âme de cisaillement (44) raccordée à un raidisseur d'extrados (46) et à un raidisseur d'intrados (48) ;
un ou plusieurs premiers joints à boulon comprenant un tube à boulon (52) situé à une première extrémité de la structure de poutre (40) pour se raccorder par un joint à ajustement serré à l'extrémité réceptrice du second segment de pale (32) ; et
une pluralité de seconds joints à boulon comprenant des tubes à boulon respectifs (56, 58) situés dans le joint dans le sens de la corde (34) pour raccorder les premier et second segments de pale par un joint à ajustement serré, dans laquelle les un ou plusieurs premiers joints à boulon situés à la première extrémité de la structure de poutre (40) sont séparés dans le sens de l'envergure avec la pluralité de seconds joints à boulon situés dans le joint dans le sens de la corde.

2. Pale d'éolienne (28) selon la revendication 1, dans laquelle la pluralité de seconds joints à boulon comprend un joint à boulon de bord d'attaque et un joint à boulon de bord de fuite.

3. Pale d'éolienne (28) selon l'une quelconque des revendications précédentes, dans laquelle chacun du joint à boulon de bord d'attaque et du joint à boulon de bord de fuite est orienté dans le sens de l'envergure et comprend un ou plusieurs brides (55, 57) qui sont configurées pour distribuer des charges de compression dans le joint dans le sens de la corde.

4. Pale d'éolienne (28) selon l'une quelconque des revendications précédentes, dans laquelle le premier joint à boulon situé à la première extrémité de la structure de poutre (40) est orienté dans le sens de l'envergure.

5. Pale d'éolienne (28) selon l'une quelconque des revendications précédentes, comprenant en outre un élément de capteur (51) disposé sur le un premier joint à boulon pour mesurer de multiples paramètres.

6. Pale d'éolienne (28) selon la revendication 5, dans laquelle les multiples paramètres mesurés par l'élément de capteur (51) comprennent des charges ou des tensions de pale.

7. Pale d'éolienne (28) selon l'une quelconque des revendications précédentes, dans laquelle l'un de la pluralité de seconds joints à boulon situés à proximité du joint dans le sens de la corde (34) sur la structure de poutre (40) est orienté dans le sens de la corde.

8. Pale d'éolienne (28) selon l'une quelconque des revendications précédentes, dans laquelle la section réceptrice du second segment de pale (32) comprend une pluralité de structures de longeron (66) s'étendant longitudinalement pour se raccorder à la structure de poutre (40) du premier segment de pale (30) en utilisant l'un de la pluralité de premiers joints à boulon dans le sens de la corde.

9. Pale d'éolienne (28) selon l'une quelconque des revendications précédentes, dans laquelle la section réceptrice du second segment de pale (32) comprend un élément de fixation rectangulaire qui se raccorde à la structure de poutre (40) du premier segment de pale (30) en utilisant l'un de la pluralité de premiers joints à boulon dans le sens de l'envergure.

10. Pale d'éolienne (28) selon l'une quelconque des revendications précédentes, comprenant en outre une pluralité d'éléments dans le sens de la corde dans le joint dans le sens de la corde qui sont constitués d'une matière plastique renforcée par des fibres pour supporter la structure de poutre (40).

11. Pale d'éolienne (28) selon l'une quelconque des revendications précédentes, comprenant en outre une pluralité de câbles récepteurs de foudre qui sont noyés entre la pluralité de seconds tubes à boulon (56, 58) ou de broches et une pluralité de raccords à douille fixés à la pluralité d'éléments dans le sens de la corde.

12. Procédé (100) pour assembler une pale d'éolienne (28) selon l'une quelconque des revendications précédentes, le procédé comprenant :
l'aménagement (102) d'un premier segment de pale (30) et d'un second segment de pale (32) dans des sens opposés à partir d'un joint dans le sens de la corde (34), chacun des segments de pale ayant un élément de coque intrados, un élément de coque extrados et une structure de support interne ;
l'insertion (104) d'une structure de poutre (40) s'étendant longitudinalement depuis le premier segment de pale dans une section réceptrice du second segment de pale;
la fixation (106) d'une extrémité libre de la structure de poutre (40) à l'extrémité réceptrice du second segment de pale en utilisant un ou plusieurs premiers joints à boulon ; et
le raccordement (108) des deux segments de pale (30, 32) en utilisant une pluralité de seconds joints à boulon situés dans le joint dans le sens de la corde, dans lequel la pluralité de premiers joints à boulon situés à la première extrémité de la structure de poutre est séparée dans le sens de l'envergure avec la pluralité de seconds joints à boulon situés dans le joint dans le sens de la corde.

13. Procédé (100) selon la revendication 12, comprenant en outre la fixation de l'extrémité libre de la structure de poutre (40) à l'extrémité réceptrice du second segment de pale (32) en utilisant un premier joint à boulon qui est orienté dans le sens de l'envergure.
